# EUROPEAN PATENT APPLICATION

(11) **EP 4 686 133 A1**
(43) Date of publication of application: **28.01.2026**
(21) Application number: 24791905.3
(22) Date of filing: 11.04.2024
(51) Int. Cl.: H04L 5/00

(54) **REFERENCE SIGNAL CONFIGURATION METHOD, TERMINAL, NETWORK DEVICE AND STORAGE MEDIUM**

(30) Priority: 21.04.2023 CN 202310431205
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZHANG, Jingwen, Beijing 100032 (CN)
(74) Representative: GPI Brevets
(86) International application number: PCT/CN2024/087164
(87) International publication number: WO 2024/217320

(57) **Abstract**

A reference signal configuration method, a terminal, a network device, and a storage medium are provided in embodiments of the present disclosure. The method includes: receiving first information sent by a network, wherein the first information includes at least one of the followings: first indication information, used to determine an uplink positioning reference signal resource for transmitting, by the terminal in an inactive state, an uplink positioning reference signal; second indication information, used to indicate at least one cell; first configuration information, used to configure at least one uplink positioning reference signal resource for the at least one cell; or second configuration information, used to configure at least one downlink reference signal resource for the at least one cell.

## Description

### CROSS-REFERENCE TO RELATED APPLICATION

The present application claims a priority to the Chinese patent application No. 202310431205.4 filed in China on April 21, 2023, a disclosure of which is incorporated herein by reference in its entirety.

### TECHNICAL FIELD

The present disclosure relates to the field of mobile communication technology, and in particular, to a reference signal configuration method, a terminal, a network device, and a storage medium.

### BACKGROUND

A New Radio (NR) system will be enhanced for high-precision, low-power positioning technology to meet the following objectives: positioning accuracy less than 1 meter, positioning interval of 15-30 seconds, and battery life of 6-12 months. To achieve the above battery life requirement, further enhancements to positioning based on inactive state positioning (i.e., positioning for UEs in the RRC_INACTIVE state) are necessary. These enhancements include extending an Extended Discontinuous Reception (eDRX) cycle for positioning-related improvements and enhancements to the configuration of Sounding Reference Signal (SRS) for positioning in the inactive state, among others.

In the related art, non-active state positioning using the SRS is configured by the serving cell. When the Timing Advance (TA) validation fails due to factors such as terminal mobility, the non-active state positioning SRS configuration becomes invalid. As a result, the terminal needs to re-enter a connected state to obtain a valid positioning SRS configuration. This frequent transition of the terminal to the connected state can lead to reduced battery life.

### SUMMARY

At least one embodiment of the present disclosure provides a reference signal configuration method, a terminal, a network device and a storage medium, which are used to solve the problems of high power consumption and short battery life caused by the terminal frequently entering the connected state to obtain the SRS configuration in the related art.

To solve the above technical problems, the present disclosure is implemented as follows.

In a first aspect, an embodiment of the present disclosure provides a reference signal configuration method, applied to a terminal, the method including:
receiving first information sent by a network, wherein the first information includes at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

Optionally, the first information is carried in a Radio Resource Control (RRC) release message and/or a System Information Block (SIB) signaling.

Optionally, the above method further includes:
receiving second information sent by the network, wherein the second information is used to indicate a first downlink reference signal resource available in the at least one downlink reference signal resource;
determining, according to the second information, the first downlink reference signal resource that is currently available.

Optionally, the first information further includes third indication information, the third indication information is used to indicate an index of an indication bit corresponding to the downlink reference signal resource; in the second information, a value of the indication bit corresponding to the first downlink reference signal resource is a preset value.

Optionally, the second information is carried in a Paging Early Indication (PEI), a paging message, an Msg4 or an MsgB.

Optionally, the above method further includes:
determining a resource for transmitting, by the terminal in the inactive state, the uplink positioning reference signal.

Optionally, the determining the resource for transmitting, by the terminal in the inactive state, the uplink positioning reference signal includes at least one of the followings:
receiving the downlink reference signal based on the first downlink reference signal resource that is currently available;
determining, based on the first downlink reference signal resource and the first indication information, one or more uplink positioning reference signal resources for transmitting the uplink positioning reference signal;
determining a first spatial domain transmission filter for transmitting the uplink positioning reference signal, wherein the first spatial domain transmission filter is the same as a spatial domain transmission filter for receiving the downlink reference signal; or
estimating a path loss based on the received downlink reference signal, and determining a transmission power of the uplink positioning reference signal resource according to the path loss.

Optionally, a time domain interval between the first downlink reference signal resource and the one or more uplink positioning reference signal resources is less than a preset duration.

Optionally, the first configuration information of each uplink positioning reference signal resource includes at least one of the followings: a resource set identifier, a resource identifier, a time domain type, a period, a time slot offset, a transmission comb, a sequence identifier, Bandwidth Part (BWP) configuration information, a timing advance timer (TA timer), or a Reference Signal Received Power (RSRP) variation threshold of the uplink positioning reference signal.

Optionally, the above method further includes:
in the case that the RSRP variation of the downlink reference signal exceeds the RSRP variation threshold, sending an Msg3 or MsgA to the network, wherein the Msg3 or MsgA is used to request an update of available downlink reference signal resource;
receiving an Msg4 or MsgB sent by the network, obtaining, from the Msg4 or MsgB, an updated second downlink reference signal resource and second uplink positioning reference signal resource associated with the updated second downlink reference signal resource, and sending the uplink positioning reference signal based on the second uplink positioning reference signal resource.

Optionally, the above method further includes:
receiving, in the inactive state, two downlink reference signals sent separately by the network, and calculating a time difference of arrival between the two downlink reference signals;
adjusting current timing advance based on the time difference of arrival, to obtain an adjusted timing advance;
sending the uplink positioning reference signal based on the adjusted timing advance.

Optionally, when the first indication information is absent, the method further includes:
receiving a downlink reference signal sent by the at least one cell;
using timing of the downlink reference signal with the highest RSRP as downlink timing, or using an earliest arrival time among the downlink reference signals as a downlink timing;
performing downlink synchronization based on the downlink timing.

Optionally, when the first indication information is absent, and the at least one uplink positioning reference signal resource includes N uplink positioning reference signal resources, N is an integer greater than 1; the method further including:
sending the N uplink positioning reference signal resources by using different spatial domain transmission filters.

In a second aspect, an embodiment of the present disclosure provides a reference signal configuration method, applied to a network device, the method including:
sending first information to a terminal, wherein the first information includes at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

Optionally, the first information is carried in a Radio Resource Control (RRC) release message and/or a System Information Block (SIB) signaling.

Optionally, the above method further includes:
sending second information to the terminal, wherein the second information is used to indicate a first downlink reference signal resource available in the at least one downlink reference signal resource, to allow the terminal to determine, according to the second information, the first downlink reference signal resource that is currently available.

Optionally, the first information further includes:
third indication information, the third indication information is used to indicate an index of an indication bit corresponding to the downlink reference signal resource;
in the second information, a value of the indication bit corresponding to the first downlink reference signal resource is a preset value.

Optionally, the second information is carried in a Paging Early Indication (PEI), a paging message, an Msg4 or an MsgB.

Optionally, the above method further includes:
determining, based on the first indication information and the first downlink reference signal resource that is currently available for the terminal, one or more uplink positioning reference signal resources for transmitting, by the terminal, the uplink positioning reference signal;
receiving the uplink positioning reference signal sent by the terminal on the one or more uplink positioning reference signal resources.

Optionally, a time domain interval between the first downlink reference signal resource and the one or more uplink positioning reference signal resources is less than a preset duration.

Optionally, the first configuration information of each uplink positioning reference signal resource includes at least one of the followings: a resource set identifier, a resource identifier, a time domain type, a period, a time slot offset, a transmission comb, a sequence identifier, Bandwidth Part (BWP) configuration information, a timing advance timer (TA timer), or a Reference Signal Received Power (RSRP) variation threshold of the uplink positioning reference signal.

Optionally, the above method further includes:
receiving an Msg3 or MsgA, wherein the Msg3 or MsgA is sent by the terminal in the case that the RSRP variation of the downlink reference signal exceeds the RSRP variation threshold, and the Msg3 or MsgA is used to request an update of available downlink reference signal resource;
sending an Msg4 or MsgB to the terminal, wherein the Msg4 or MsgB is used to indicate the updated second downlink reference signal resource and second uplink positioning reference signal resource associated with the updated second downlink reference signal resource, to allow the terminal to send the uplink positioning reference signal based on the second uplink positioning reference signal resource.

Optionally, when the first indication information is absent, and the at least one uplink positioning reference signal resource includes N uplink positioning reference signal resources, N is an integer greater than 1; the method further including:
sending, by the network device, a downlink reference signal in the form of a single frequency network; and
receiving the N uplink positioning reference signal resources sent by the terminal by using different spatial domain transmission filters.

In a third aspect, an embodiment of the present disclosure provides a terminal, including a transceiver and a processor, wherein
the transceiver is configured to receive first information sent by a network; the first information includes at least one of the followings:
first configuration information of at least one uplink positioning reference signal resource;
second configuration information of at least one downlink reference signal resource;
first indication information, used to determine an uplink positioning reference signal resource for transmitting, by the terminal in an inactive state, an uplink positioning reference signal; or
second indication information, used to indicate at least one cell.

In a fourth aspect, an embodiment of the present disclosure provides a first network device, including: a processor, a memory, and a program stored on the memory and executable on the processor, wherein the processor is configured to execute the program to implement the steps of the method described in the first aspect.

In a fifth aspect, an embodiment of the present disclosure provides a network device, including a transceiver and a processor, wherein
the transceiver is configured to send first information to the terminal, wherein the first information includes at least one of the followings:
first configuration information of at least one uplink positioning reference signal resource;
second configuration information of at least one downlink reference signal resource;
first indication information, used to determine an uplink positioning reference signal resource for transmitting, by the terminal in an inactive state, an uplink positioning reference signal; or
second indication information, used to indicate at least one cell.

In a sixth aspect, an embodiment of the present disclosure provides a second network device, including: a processor, a memory, and a program stored on the memory and executable on the processor, wherein the processor is configured to execute the program to implement the steps of the method described in the second aspect.

In a seventh aspect, an embodiment of the present disclosure provides a computer-readable storage medium storing a computer program, wherein the computer program is used to be executed by a processor to implement the steps of the method described above.

Compared with related art, the reference signal configuration method, terminal, network device, and storage medium provided by the embodiments of the present disclosure extend the configuration of uplink positioning reference signal resources in the inactive state to at least one cell. In this way, when the terminal moves within the at least one cell, the problem of the terminal frequently entering the connected state due to the invalidation of the uplink positioning reference signal resource configuration is avoided. Thereby, the frequency of the terminal entering the connected state to obtain the uplink positioning reference signal resource configuration is reduced, which can decrease power consumption and improve battery life of the terminal.

### BRIEF DESCRIPTION OF THE DRAWINGS

Through reading the detailed description of the preferred embodiments below, various additional advantages and benefits will become apparent to those of ordinary skill in the art. The accompanying drawings are provided solely for illustrating the preferred embodiments and are not to be construed as limiting the present disclosure. Furthermore, throughout the drawings, the same reference numerals are used to denote identical components. In the drawings:
FIG. 1 is a schematic diagram of an application scenario according to an embodiment of the present disclosure;
FIG. 2 is a flowchart of a reference signal configuration method according to an embodiment of the present disclosure;
FIG. 3 and FIG. 4 are example diagrams of a reference signal configuration method according to an embodiment of the present disclosure;
FIG. 5 is an example diagram of adjusting the TA according to an embodiment of the present disclosure;
FIG. 6 is another flowchart of a method for configuring a reference signal according to an embodiment of the present disclosure;
FIG. 7 is a schematic structural diagram of a terminal according to an embodiment of the present disclosure;
FIG. 8 is a schematic structural diagram of a terminal according to another embodiment of the present disclosure;
FIG. 9 is a schematic structural diagram of a network device according to an embodiment of the present disclosure;
FIG. 10 is a schematic structural diagram of a network device according to another embodiment of the present disclosure;
FIG. 11 is a schematic structural diagram of a terminal according to yet another embodiment of the present disclosure;
FIG. 12 is a schematic structural diagram of a network device according to yet another embodiment of the present disclosure.

### DETAILED DESCRIPTION

Exemplary embodiments of the present disclosure will be described in more detail below with reference to the accompanying drawings. Although exemplary embodiments of the present disclosure are shown in the accompanying drawings, it should be understood that the present disclosure can be implemented in various forms and should not be limited by the embodiments set forth herein. Rather, these embodiments are provided to enable a more thorough understanding of the present disclosure and to fully convey the scope of the present disclosure to those skilled in the art.

The terms "first," "second," and the like in the specification and claims of the present disclosure are used to distinguish similar objects and are not necessarily intended to indicate a specific order or sequence. It should be understood that the data used in this way can be interchangeable under appropriate circumstances, so that the embodiments of the present disclosure described herein can, for example, be implemented in an order other than those illustrated or described herein. In addition, the terms "including" and "having" and any of their variations are intended to cover non-exclusive inclusions. For example, a process, method, system, product or device that includes a series of steps or units is not necessarily limited to those steps or units clearly listed, but may include other steps or units that are not clearly listed or inherent to these processes, methods, products or devices. "And/or" in the specification and claims represents at least one of the connected objects.

The technology described herein is not limited to NR systems and Long Time Evolution (LTE)/LTE-Advanced (LTE -A) systems and can also be used in various wireless communication systems, such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA), and other systems. The terms "system" and "network" are often used interchangeably. A CDMA system may implement radio technologies such as CDMA2000 and Universal Terrestrial Radio Access (UTRA), etc. The UTRA includes Wideband Code Division Multiple Access (WCDMA) and other CDMA variants. A TDMA system implements radio technologies such as Global System for Mobile Communication (GSM). An OFDMA system implements radio technologies such as Ultra Mobile Broadband (UMB), Evolution-UTRA (E-UTRA), Institute of Electrical and Electronics Engineers (IEEE) 802.21 (Wireless Fidelity (Wi-Fi)), IEEE 802.16 (World Interoperability for Microwave Access (WiMAX)), IEEE 802.20, Flash-OFDM, and others. The UTRA and E-UTRA are parts of the Universal Mobile Telecommunications System (UMTS). The LTE and LTE-Advanced (LTE-A) are new releases of UMTS that use E-UTRA. The UTRA, E-UTRA, UMTS, LTE, LTE-A, and GSM are described in documents from an organization known as the 3rd Generation Partnership Project (3GPP). The CDMA2000 and UMB are described in documents from an organization known as the 3rd Generation Partnership Project 2 (3GPP2). The techniques described herein may be used for the systems and radio technologies mentioned above, as well as for other systems and radio technologies. However, the following description describes an NR system for example, and NR terminology is used throughout the description, although the techniques may also be applicable to applications beyond NR systems.

The following description provides examples and does not limit the scope, applicability, or configuration set forth in the claims. Changes may be made to the function and arrangement of the elements discussed without departing from the spirit and scope of the present disclosure. The various examples may appropriately omit, substitute, or add various procedures or components. For example, the described methods may be performed in an order different from that described, and various steps may be added, omitted, or combined. In addition, features described with reference to certain examples may be combined in other examples.

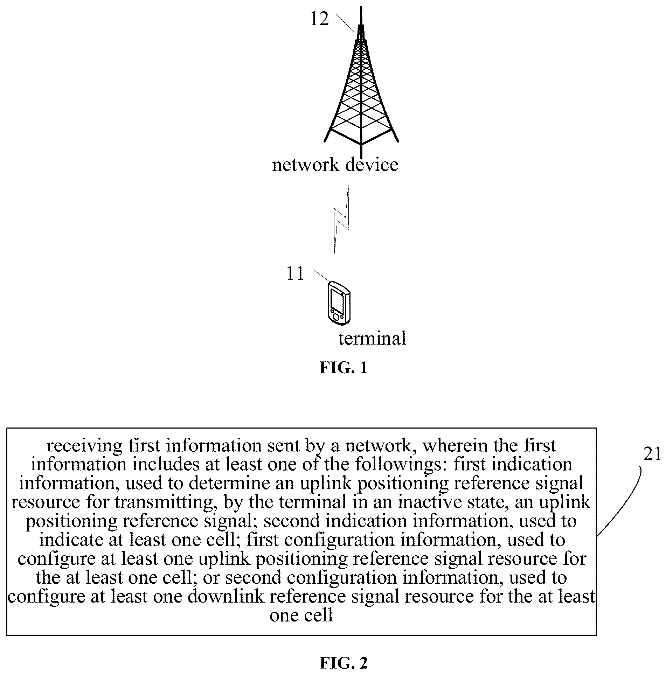

Referring to FIG. 1, which shows a block diagram of a wireless communication system applicable to the embodiments of the present disclosure. The wireless communication system includes a terminal 11 and a network device 12. The terminal 11 may also be referred to as a user terminal or User Equipment (UE). The terminal 11 may be a terminal-side device such as a mobile phone, tablet personal computer, laptop computer, Personal Digital Assistant (PDA), Mobile Internet Device (MID), Wearable Device (Wearable Device), or vehicle-mounted device. It should be noted that the specific type of the terminal 11 is not limited in the embodiments of the present disclosure. The network device 12 may be a base station and/or a core network element, wherein the base station may be a base station of the fifth generation mobile communication technology (5G) and later versions (for example, the next generation Node B (gNB), 5G NR Node B (NB), etc.), or a base station in other communication systems (for example, eNB, Wireless Local Area Network (WLAN) access point, or other access point, etc.). The base station may be referred to as a node B, an evolved node B, an access point, a Base Transceiver Station (BTS), a radio base station, a radio transceiver, a Basic Service Set (BSS), an Extended Service Set (ESS), a node B, an evolved node B (eNB), a home node B, a home evolved node B, a WLAN access point, a Wireless Fidelity (WiFi) node or some other appropriate term in the field. As long as the same technical effect is achieved, the base station is not limited to specific technical terms. It should be noted that in the embodiments of the present disclosure, the base station in the NR system is only taken as an example and is not intended to limit the specific type of the base station.

The base station can communicate with the terminal 11 under the control of a base station controller. In various examples, the base station controller can be part of the core network or certain base stations. Some base stations can communicate control information or user data with the core network via a backhaul. In some examples, some of these base stations can communicate with each other directly or indirectly through a backhaul link, which can be a wired or wireless communication link. Wireless communication systems can support operation on multiple carriers (waveform signals of different frequencies). A multicarrier transmitter can simultaneously transmit modulated signals over these multiple carriers. For example, each communication link can be a multicarrier signal modulated according to various radio technologies. Each modulated signal can be sent on a different carrier and can carry control information (e.g., reference signals, control channels, etc.), overhead information, data, etc.

A base station can communicate wirelessly with the terminal 11 via one or more access point antennas. Each base station can provide communication coverage for its respective coverage area. The coverage area of an access point can be divided into sectors that constitute only a part of the coverage area. A wireless communication system may include different types of base stations (e.g., macro base stations, micro base stations, or pico base stations). The base stations may also utilize different radio technologies, such as cellular or WLAN radio access technologies. The base stations may be associated with the same or different access networks or operator deployments. The coverage areas of different base stations (including coverage areas of the same or different types of base stations, utilizing the same or different radio technologies, or belonging to the same or different access networks) may overlap.

A communication link in a wireless communication system may include an uplink (UL) for carrying uplink transmissions (e.g., from terminal 11 to network device 12) or a downlink (DL) for carrying downlink transmissions (e.g., from network device 12 to terminal 11). UL transmissions may also be referred to as reverse link transmissions, while DL transmissions may also be referred to as forward link transmissions. The downlink transmissions may be performed using licensed spectrum, unlicensed spectrum, or both. Similarly, uplink transmissions may be performed using licensed spectrum, unlicensed spectrum, or both.

In Release 17, the NR system has introduced support for positioning terminals with energy-saving requirements to send positioning Sounding Reference Signal (SRS) in an inactive state. The positioning SRS sent by the terminal in the inactive state is configured in the Radio Resource Control Release (RRC Release) message, specifically including the followings.

1) Positioning SRS resource set and resource configuration, including a resource set identifier, a resource identifier, a resource mapping pattern, power control parameters (including pathloss reference signal (pathloss RS)), spatial relation information (including spatial relation RS), etc. The time domain type supports periodic and semi-persistent positioning SRS.

The pathloss RS: the pathloss RS for positioning SRS can be configured as a Synchronization Signal Block (SSB) and Downlink Positioning Reference Signal (DL PRS) of the serving cell or neighboring cell. When the terminal is in an inactive state and unable to accurately measure the pathloss RS, the terminal stops sending the positioning SRS.

The spatial relation RS: the spatial relation RS for positioning SRS can be configured as the SSB and DL PRS of the serving cell or neighboring cell; the Channel State Information Reference Signal (CSI Reference Signal, CSI-RS), Multiple-In Multiple-Out (MIMO) SRS, and positioning SRS of the serving cell; when the terminal is in an inactive state and unable to accurately measure the spatial relation RS, the terminal stops sending the positioning SRS.

2) Bandwidth Part (BWP) Configuration: by default, the positioning SRS is configured within an initial uplink bandwidth part (initial UL BWP) of the User Equipment (UE). The positioning SRS can be configured outside the UE initial UL BWP to achieve higher positioning accuracy, depending on the UE capability.

3) Timing Advance timer (TA timer): the TA timer for the inactive positioning SRS, whose value refers to the Small Data Transmission (SDT) TA timer. When this timer expires, the configured inactive positioning SRS becomes invalid and the UE needs to re-enter a connected state to obtain a valid positioning SRS configuration.

4) Timing Advance (TA) Validity: the validity of the TA is determined based on the Reference Signal Received Power (RSRP) of a reference signal. When the RSRP variation of the reference signal (e.g., SSB) used for TA validation exceeds the configured threshold, the configured inactive positioning SRS becomes invalid and the UE needs to re-enter the connected state to obtain a valid positioning SRS configuration.

As described in the background, the inactive SRS is configured by the serving cell. When the terminal fails the TA validation due to mobility or other reasons, the positioning SRS configuration in the inactive state becomes invalid and the terminal needs to re-enter the connected state to obtain the configuration. Frequent transition of the terminal to the connected state can lead to reduced battery life.

To enhance the configuration of positioning SRS in the inactive state, one solution is to support SRS mobility, that is, an inactive positioning SRS configuration that is valid across multiple cells (within a validity area). To support SRS configuration based on the validity area, the following issues need to be addressed.

Downlink synchronization based on the SSB may increase the duration of power consumption during terminal wake-up. The terminal needs to adjust the Timing Advance (TA) based on downlink synchronization when sending the positioning SRS. For the low-power and high-precision positioning terminal, an eDRX cycle and SRS cycle may be as long as tens of seconds. During this period, the terminal will enter sleep mode, making it difficult to maintain accurate downlink synchronization. The known downlink synchronization requires monitoring the SSB, but the SSB is cell-specific and may be located far apart from the inactive-state SRS in the time domain, resulting in prolonged wake-up duration and higher power consumption for the UE.

Power control and spatial relation: the known pathloss RS and spatial relation RS are configured based on the serving cell where the terminal is located, and are difficult to directly apply to the validity area of multiple cells.

To solve one or more of the above problems, embodiments of the present disclosure provide a reference signal configuration method applicable to the configuration and sending of an inactive uplink positioning reference signal (such as SRS) within the validity area.

Referring to FIG. 2, an uplink positioning reference signal (such as SRS) configuration method provided by an embodiment of the present disclosure, when applied to a terminal, includes:
step 21: receiving first information sent by a network, wherein the first information includes at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

The first information may be carried in a Radio Resource Control (RRC) release message and/or a System Information Block (SIB) signaling sent by the network. The uplink positioning reference signal resource is a resource for transmitting an uplink positioning reference signal, and the downlink reference signal resource is a resource for transmitting a downlink reference signal. Specifically, the first configuration information of each uplink positioning reference signal resource may include at least one of the followings: a resource set identifier, a resource identifier, a time domain type, a period, a time slot offset, a transmission comb, a sequence identifier, Bandwidth Part (BWP) configuration information, a timing advance timer (TA timer), or a Reference Signal Received Power (RSRP) variation threshold of the uplink positioning reference signal.

The uplink positioning reference signal resource configured in the first configuration information is configured for the at least one cell included in the second indication information; the downlink reference signal resource configured in the second configuration information is also configured for the at least one cell included in the second indication information. That is, the at least one uplink positioning reference signal resource in the first configuration information is applicable to the at least one cell included in the second indication information, and the at least one downlink reference signal resource in the second configuration information is applicable to the at least one cell included in the second indication information.

The first indication information is used to determine, from the at least one uplink positioning reference signal resource configured in the first configuration information, an uplink positioning reference signal resource for transmitting, by the terminal in an inactive state.

The second indication information is used to indicate at least one cell. Optionally, it may indicate N cells, where N is an integer greater than or equal to 2. Specifically, a specific cell may be indicated by a Physical Cell Identifier (PCI) or the like.

In addition, in the present disclosure, the uplink positioning reference signal resource may be an uplink positioning reference signal resource set and/or a resource configured within the uplink positioning reference signal resource set. The downlink reference signal resource may be a downlink reference signal resource set and/or a resource configured within the downlink reference signal resource set.

As a specific implementation, the first indication information may represent an association relationship between the uplink positioning reference signal resource and the downlink reference signal resource. In this way, the terminal may determine, based on the association relationship between the first downlink reference signal resource, the uplink positioning reference signal resource and the downlink reference signal resource, an uplink positioning reference signal resource associated with the first downlink reference signal resource as one or more uplink positioning reference signal resources for transmitting an uplink positioning reference signal.

Through the above steps, the embodiments of the present disclosure extend the uplink positioning reference signal resource configuration in the inactive state to the at least one cell. In this way, when the terminal moves in the at least one cell, the problem of the terminal frequently entering the connected state due to the invalidation of the uplink positioning reference signal resource configuration is avoid. Thereby, the frequency of the terminal entering the connected state to obtain the uplink positioning reference signal resource configuration is reduced, which can decrease power consumption and improve battery life of the terminal.

In the embodiments of the present disclosure, the terminal may further receive second information sent by the network, wherein the second information is used to indicate a first downlink reference signal resource available in the at least one downlink reference signal resource; and further determine, according to the second information, the first downlink reference signal resource that is currently available. Specifically, the second information may be carried in a message such as a Paging Early Indication (PEI), a paging message, an Msg4 or an MsgB.

Optionally, in an embodiment of the present disclosure, the first information further includes third indication information, and the third indication information is used to indicate an index of an indication bit corresponding to the downlink reference signal resource. The third indication information can specifically be a bitmap, including an indication bit corresponding to each downlink reference signal resource. For example, in the second information sent by the network, a value of the indication bit corresponding to the first downlink reference signal resource is a preset value. For example, when the value is 1, it indicates that the downlink reference signal resource corresponding to the indication bit is available; when the value is 0, it indicates that the downlink reference signal resource corresponding to the indication bit is unavailable. Obviously, the above values may also be defined such that 1 indicates unavailable and 0 indicates available. The present disclosure is not limited to any specific definition in this regard.

After step 21, the terminal may further determine a resource for transmitting, by the terminal in the inactive state, the uplink positioning reference signal. Specifically, the determining the resource for transmitting, by the terminal in the inactive state, the uplink positioning reference signal includes at least one of the followings:
receiving the downlink reference signal based on the first downlink reference signal resource that is currently available;
determining, based on the first downlink reference signal resource and the first indication information, one or more uplink positioning reference signal resources for transmitting the uplink positioning reference signal;
determining a first spatial domain transmission filter for transmitting the uplink positioning reference signal, wherein the first spatial domain transmission filter is the same as a spatial domain transmission filter for receiving the downlink reference signal; or
estimating a path loss based on the received downlink reference signal, and determining a transmission power of the uplink positioning reference signal resource according to the path loss.

That is, power control information and spatial relation information for transmitting the uplink positioning reference signal may be determined by the downlink reference signal.

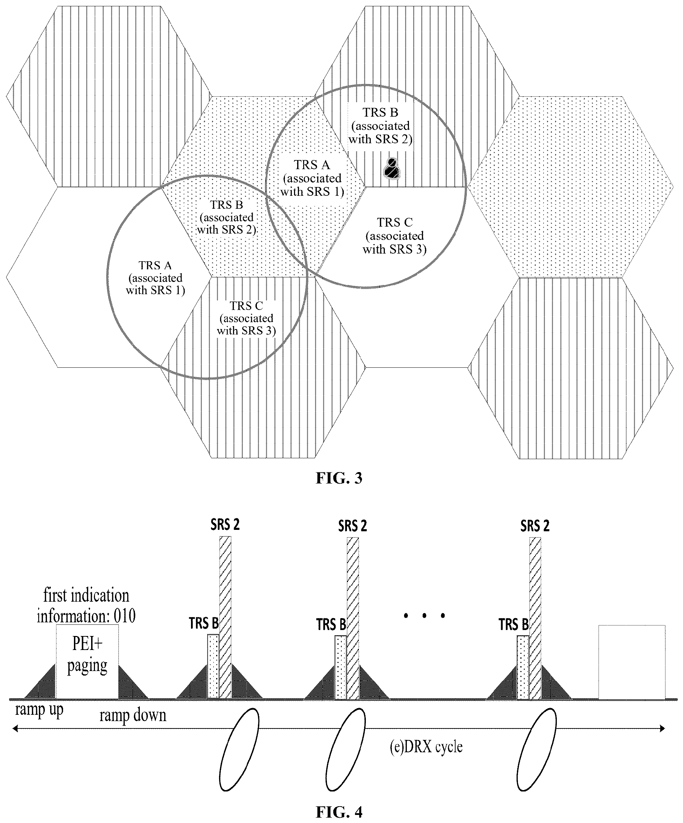

FIGs. 3 and 4 provide a specific example of the above method of the embodiments of the present disclosure. In this example, it is assumed that the network configures three uplink positioning SRSs (SRSs 1 to 3) and three downlink reference signals (TRSs A to C) through an RRC Release or SIB messages. The TRS A is associated with the SRS 1, which corresponds to the first bit in the above bitmap; the TRS B is associated with the SRS 2, which corresponds to the second bit in the above bitmap; and so on. The PEI received by the terminal carries the second bit in the bitmap as '1', indicating that the TRS B is currently available. The terminal determines the power control and spatial relation information based on the configuration of the TRS B, and accordingly sends the SRS 2 associated with the TRS B.

In addition, in an embodiment of the present disclosure, a time domain interval between the first downlink reference signal resource and the one or more uplink positioning reference signal resources is less than a preset duration. This helps mitigate the issue of prolonged power consumption caused by terminal wake-up based on SSB synchronization, thereby reducing power consumption of the terminal.

In an embodiment of the present disclosure, an RSRP variation threshold in the TA validation criterion may also be obtained based on the downlink reference signal configured by the network. Furthermore, the RSRP variation in this criterion only indicates that the positioning reference signal (e.g., SRS) previously indicated as available is no longer applicable. In this case, the terminal does not enter the connected state, but instead requests the network to update the available Tracking Reference Signal (TRS) and its associated positioning reference signal resources through a Random Access Channel (RACH) process. That is, the terminal can promptly update the available positioning SRS resources based on location changes between two paging occasions, without entering the connected state, thereby reducing power consumption of the terminal.

Specifically, in an embodiment of the present disclosure, when the RSRP variation of the downlink reference signal exceeds the RSRP variation threshold, the terminal may further send an Msg3 or MsgA to the network, wherein the Msg3 or MsgA is used to request an update of the available downlink reference signal resource. The terminal then receives an Msg4 or MsgB sent by the network, obtains, from the Msg4 or MsgB, an updated second downlink reference signal resource and its associated second uplink positioning reference signal resource, and sends the uplink positioning reference signal based on the second uplink positioning reference signal resource.

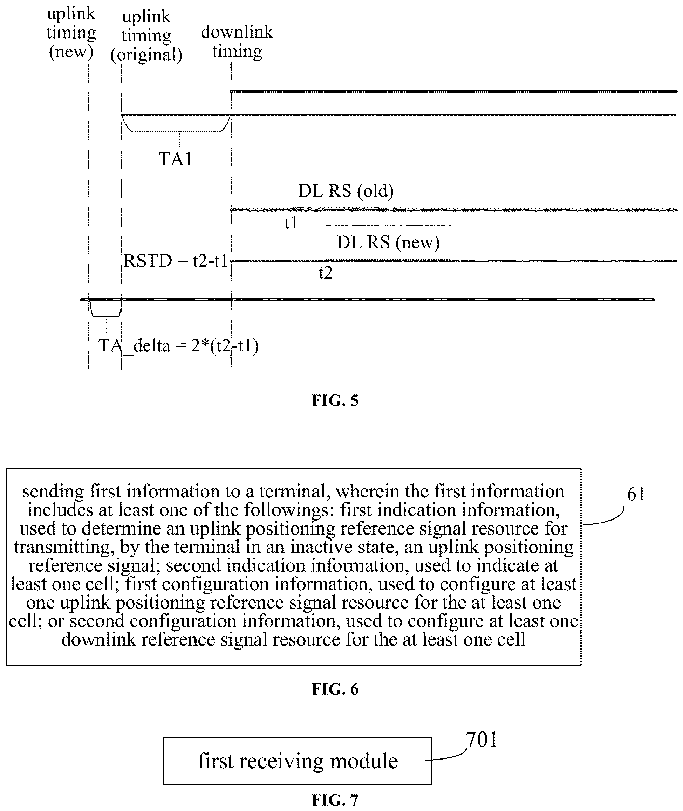

Furthermore, to reduce the inaccuracy of the Timing Advance (TA), the terminal can perform adaptive TA adjustment based on the time difference of arrival between two downlink reference signals, i.e., TA_delta is twice the time difference of arrival. Specifically, the terminal can also receive, in the inactive state, two downlink reference signals sent separately by the network, and calculate a time difference of arrival between the two downlink reference signals; then, adjust current timing advance based on the time difference of arrival, to obtain an adjusted timing advance; send the uplink positioning reference signal based on the adjusted timing advance. Here, the adjusted timing advance is obtained by adding twice the time difference of arrival to the timing advance before adjustment. FIG. 5 provides an example diagram of adaptive TA adjustment based on the time difference of arrival between two downlink reference signals. The adjusted TA = TA1 + TA_delta, where TA1 is the TA before adjustment.

In an embodiment of the present disclosure, the network may configure only one downlink reference signal resource for the at least one cell. In this case, in the first information, the at least one downlink reference signal resource configured by the second configuration information includes only one downlink reference signal resource. When the network sends the downlink reference signal within the at least one cell, it may be sent in the form of a Single Frequency Network (SFN). Since only one downlink reference signal resource is included, the first information may not include the first indication information, meaning the first indication information is absent. In this scenario, the above method of the embodiment of the present disclosure can be further simplified to the following method, which is more beneficial for power saving at the terminal.
(1) When the first indication information is absent, the terminal receives a downlink reference signal sent by the at least one cell, and then uses the timing of the downlink reference signal with the highest RSRP as the downlink timing, or uses the earliest arrival time among the downlink reference signals as the downlink timing. Then, downlink synchronization is performed based on the downlink timing. Here, the earliest arrival time among the downlink reference signals may specifically be the earliest arrival time among the downlink reference signals whose RSRP exceeds a preset RSRP threshold.
(2) When the first indication information is absent, the at least one uplink positioning reference signal resource includes N uplink positioning reference signal resources, where N is an integer greater than 1. Typically, N is greater than or equal to the number of transmit beams of the terminal. In this case, the terminal sends the N uplink positioning reference signal resources by using different spatial domain transmission filters.

Referring to FIG. 6, A reference signal configuration method provided by an embodiment of the present disclosure, when applied to a network device (such as a base station), includes:
step 61: sending first information to a terminal, wherein the first information includes at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

Specifically, the network device may send the first information to the terminal by including it in an RRC release message and/or SIB signaling.

The uplink positioning reference signal resources configured in the first configuration information and the downlink reference signal resources configured in the second configuration information, are both configured for the at least one cell included in the second indication information.

The first configuration information of each uplink positioning reference signal resource includes at least one of the followings: a resource set identifier, a resource identifier, a time domain type, a period, a time slot offset, a transmission comb, a sequence identifier, Bandwidth Part (BWP) configuration information, a timing advance timer (TA timer), or a Reference Signal Received Power (RSRP) variation threshold of the uplink positioning reference signal.

The first indication information is used to determine, from the at least one uplink positioning reference signal resource configured in the first configuration information, the uplink positioning reference signal resource for transmitting, by the terminal in the inactive state, the uplink positioning reference signal.

As a specific implementation, the first indication information may represent an association relationship between the uplink positioning reference signal resource and the downlink reference signal resource. In this way, the terminal may determine, based on the association relationship between the first downlink reference signal resource, the uplink positioning reference signal resource and the downlink reference signal resource, an uplink positioning reference signal resource associated with the first downlink reference signal resource as one or more uplink positioning reference signal resources for transmitting an uplink positioning reference signal.

Through the above steps, the embodiments of the present disclosure extend the uplink positioning reference signal resource configuration in the inactive state to the at least one cell, which can avoid or reduce the problem of the terminal frequently entering the connected state due to the invalidation of the uplink positioning reference signal resource configuration. Thereby, the frequency of the terminal entering the connected state to obtain the uplink positioning reference signal resource configuration is reduced, which can decrease power consumption of the terminal and improve battery life.

In the embodiments of the present disclosure, the network device may further send second information to the terminal, wherein the second information is used to indicate a first downlink reference signal resource available in the at least one downlink reference signal resource, to allow the terminal to determine, according to the second information, the first downlink reference signal resource that is currently available. In addition, the second information may be carried in a message such as a Paging Early Indication (PEI), a paging message, an Msg4 or an MsgB.

Optionally, in an embodiment of the present disclosure, the first information further includes third indication information, the third indication information is used to indicate an index of an indication bit corresponding to the downlink reference signal resource. The third indication information may specifically be a bitmap, including an indication bit corresponding to each downlink reference signal resource. For example, in the second information sent by the network, a value of the indication bit corresponding to the first downlink reference signal resource is a preset value. For example, when the value is 1, it indicates that the downlink reference signal resource corresponding to the indication bit is available.

After step 61, the network device may further determine, based on the first indication information and the first downlink reference signal resource that is currently available for the terminal, one or more uplink positioning reference signal resources for transmitting, by the terminal, the uplink positioning reference signal; and then receive the uplink positioning reference signal sent by the terminal on the one or more uplink positioning reference signal resources.

Optionally, a time domain interval between the first downlink reference signal resource and the one or more uplink positioning reference signal resources is less than a preset duration. This helps mitigate the issue of prolonged power consumption caused by terminal wake-up based on SSB synchronization.

In addition, in an embodiment of the present disclosure, in the case that the RSRP variation of the downlink reference signal exceeds the RSRP variation threshold, the terminal may further send an Msg3 or MsgA to the network, wherein the Msg3 or MsgA is used to request an update of available downlink reference signal resource. In this case, the network device receives the Msg3 or MsgA sent by the terminal in the case that the RSRP variation of the downlink reference signal exceeds the RSRP variation threshold, and then sends an Msg4 or MsgB to the terminal, wherein the Msg4 or MsgB is used to indicate the updated second downlink reference signal resource and second uplink positioning reference signal resource associated with the updated second downlink reference signal resource, to allow the terminal to send the uplink positioning reference signal based on the second uplink positioning reference signal resource.

Optionally, the first information may not include the first indication information, that is, the first indication information is absent, and the at least one uplink positioning reference signal resource includes N uplink positioning reference signal resources, N is an integer greater than 1, the network device may also receive the N uplink positioning reference signal resources sent by the terminal by using different spatial domain transmission filters.

The various methods of the embodiments of the present disclosure have been described above. The following will further provide an apparatus for implementing the above methods.

Referring to FIG. 7, an embodiment of the present disclosure provides a terminal, including:
a first receiving module 701, configured to receive first information sent by a network, wherein the first information includes at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

Through the above modules, the embodiments of the present disclosure extend the uplink positioning reference signal resource configuration in the inactive state to the at least one cell. In this way, when the terminal moves in the at least one cell, the problem of the terminal frequently entering the connected state due to the invalidation of the uplink positioning reference signal resource configuration is avoid. Thereby, the frequency of the terminal entering the connected state to obtain the uplink positioning reference signal resource configuration is reduced, which can decrease power consumption and improve battery life of the terminal.

Optionally, the first information is carried in a Radio Resource Control (RRC) release message and/or a System Information Block (SIB) signaling.

Optionally, the terminal further includes:
a second receiving module, configured to receive second information sent by the network, wherein the second information is used to indicate a first downlink reference signal resource available in the at least one downlink reference signal resource;
a first determining module, configured to determine, according to the second information, the first downlink reference signal resource that is currently available.

Optionally, the first information further includes third indication information, the third indication information is used to indicate an index of an indication bit corresponding to the downlink reference signal resource; in the second information, a value of the indication bit corresponding to the first downlink reference signal resource is a preset value.

Optionally, the second information is carried in a Paging Early Indication (PEI), a paging message, an Msg4 or an MsgB.

Optionally, the terminal further includes:
a second determining module, configured to determine a resource for transmitting, by the terminal in the inactive state, the uplink positioning reference signal.

Optionally, the second determining module determining a resource for transmitting, by the terminal in the inactive state, the uplink positioning reference signal includes at least one of the followings:
receiving the downlink reference signal based on the first downlink reference signal resource that is currently available;
determining, based on the first downlink reference signal resource and the first indication information, one or more uplink positioning reference signal resources for transmitting the uplink positioning reference signal;
determining a first spatial domain transmission filter for transmitting the uplink positioning reference signal, wherein the first spatial domain transmission filter is the same as a spatial domain transmission filter for receiving the downlink reference signal; or
estimating a path loss based on the received downlink reference signal, and determining a transmission power of the uplink positioning reference signal resource according to the path loss.

Optionally, a time domain interval between the first downlink reference signal resource and the one or more uplink positioning reference signal resources is less than a preset duration.

Optionally, the first configuration information of each uplink positioning reference signal resource includes at least one of the followings: a resource set identifier, a resource identifier, a time domain type, a period, a time slot offset, a transmission comb, a sequence identifier, Bandwidth Part (BWP) configuration information, a timing advance timer (TA timer), or a Reference Signal Received Power (RSRP) variation threshold of the uplink positioning reference signal.

Optionally, the terminal further includes:
a first sending module, configured to, in the case that the RSRP variation of the downlink reference signal exceeds the RSRP variation threshold, send an Msg3 or MsgA to the network, wherein the Msg3 or MsgA is used to request an update of available downlink reference signal resource;
a third receiving module, configured to receive an Msg4 or MsgB sent by the network, obtain, from the Msg4 or MsgB, an updated second downlink reference signal resource and second uplink positioning reference signal resource associated with the updated second downlink reference signal resource, and send the uplink positioning reference signal based on the second uplink positioning reference signal resource.

Optionally, the terminal further includes:
a first calculation module, configured to receive, in the inactive state, two downlink reference signals sent separately by the network, and calculate a time difference of arrival between the two downlink reference signals; adjust current timing advance based on the time difference of arrival, to obtain an adjusted timing advance;
a second sending module, configured to send the uplink positioning reference signal based on the adjusted timing advance.

Optionally, the terminal further includes:
a fourth receiving module, configured to, when the first indication information is absent, receive a downlink reference signal sent by the at least one cell;
a first synchronization module, configured to use timing of the downlink reference signal with the highest RSRP as downlink timing, or use an earliest arrival time among the downlink reference signals as a downlink timing.

Optionally, the terminal further includes:
a third sending module, configured to, when the first indication information is absent, and the at least one uplink positioning reference signal resource includes N uplink positioning reference signal resources, N is an integer greater than 1, send the N uplink positioning reference signal resources by using different spatial domain transmission filters.

It should be noted that the device in this embodiment corresponds to the method applied on the terminal side. The implementations in the above embodiments are all applicable to this device embodiment and can achieve the same technical effects. The device provided by the embodiment of the present disclosure can implement all the method steps implemented in the above-mentioned method embodiment and can achieve the same technical effects. The parts and beneficial effects of this embodiment that are the same as those in the method embodiments will not be described in detail here.

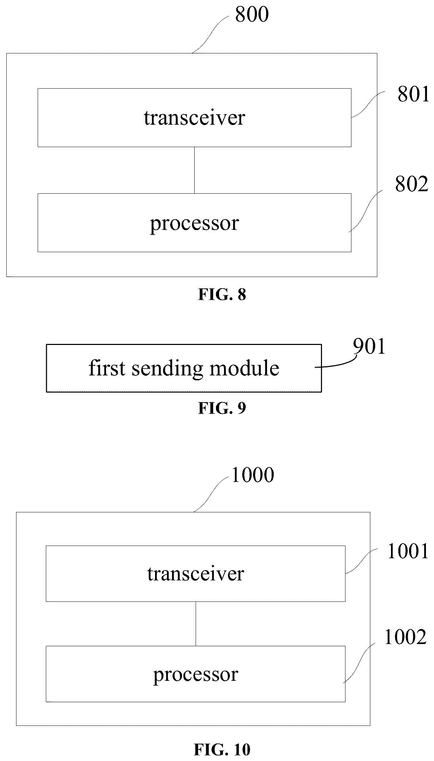

Referring to FIG. 8, an embodiment of the present disclosure further provides a terminal 800, including: a transceiver 801 and a processor 802;
the transceiver 801 is configured to receive first information sent by a network, wherein the first information includes at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

Optionally, the first information is carried in a Radio Resource Control (RRC) release message and/or a System Information Block (SIB) signaling.

Optionally, the transceiver 801 is further configured to receive second information sent by the network, wherein the second information is used to indicate a first downlink reference signal resource available in the at least one downlink reference signal resource;
the processor 802 is configured to determine, according to the second information, the first downlink reference signal resource that is currently available.

Optionally, the first information further includes third indication information, the third indication information is used to indicate an index of an indication bit corresponding to the downlink reference signal resource; in the second information, a value of the indication bit corresponding to the first downlink reference signal resource is a preset value.

Optionally, the second information is carried in a Paging Early Indication (PEI), a paging message, an Msg4 or an MsgB.

The processor 802 is configured to determine a resource for transmitting, by the terminal in the inactive state, the uplink positioning reference signal.

The processor 802 is configured for, when determining the resource for transmitting, by the terminal in the inactive state, the uplink positioning reference signal, at least one of the followings:
receiving the downlink reference signal based on the first downlink reference signal resource that is currently available;
determining, based on the first downlink reference signal resource and the first indication information, one or more uplink positioning reference signal resources for transmitting the uplink positioning reference signal;
determining a first spatial domain transmission filter for transmitting the uplink positioning reference signal, wherein the first spatial domain transmission filter is the same as a spatial domain transmission filter for receiving the downlink reference signal; or
estimating a path loss based on the received downlink reference signal, and determining a transmission power of the uplink positioning reference signal resource according to the path loss.

Optionally, a time domain interval between the first downlink reference signal resource and the one or more uplink positioning reference signal resources is less than a preset duration.

Optionally, the first configuration information of each uplink positioning reference signal resource includes at least one of the followings: a resource set identifier, a resource identifier, a time domain type, a period, a time slot offset, a transmission comb, a sequence identifier, Bandwidth Part (BWP) configuration information, a timing advance timer (TA timer), or a Reference Signal Received Power (RSRP) variation threshold of the uplink positioning reference signal.

Optionally, the transceiver 801 is further configured to, in the case that the RSRP variation of the downlink reference signal exceeds the RSRP variation threshold, send an Msg3 or MsgA to the network, wherein the Msg3 or MsgA is used to request an update of available downlink reference signal resource; receive an Msg4 or MsgB sent by the network, obtain, from the Msg4 or MsgB, an updated second downlink reference signal resource and second uplink positioning reference signal resource associated with the updated second downlink reference signal resource, and send the uplink positioning reference signal based on the second uplink positioning reference signal resource.

The processor 802 is configured to receive, in the inactive state, two downlink reference signals sent separately by the network, and calculate a time difference of arrival between the two downlink reference signals; adjust current timing advance based on the time difference of arrival, to obtain an adjusted timing advance; send the uplink positioning reference signal based on the adjusted timing advance.

Optionally, the transceiver 801 is further configured to, when the first indication information is absent, receive a downlink reference signal sent by the at least one cell.

The processor 802 is configured to use timing of the downlink reference signal with the highest RSRP as downlink timing, or use an earliest arrival time among the downlink reference signals as a downlink timing; perform downlink synchronization based on the downlink timing.

Optionally, the transceiver 801 is further configured to, when the first indication information is absent, and the at least one uplink positioning reference signal resource includes N uplink positioning reference signal resources, N is an integer greater than 1, send the N uplink positioning reference signal resources by using different spatial domain transmission filters.

It should be noted that the device in this embodiment corresponds to the method applied on the terminal side. The implementations in the above embodiments are all applicable to this device embodiment and can achieve the same technical effects. The device provided by the embodiments of the present disclosure can implement all the method steps implemented in the above-mentioned method embodiments and can achieve the same technical effects. The parts and beneficial effects of this embodiment that are the same as those in the method embodiments will not be described in detail here.

Referring to FIG. 9, an embodiment of the present disclosure further provides a network device, including:
a first sending module 901, configured to send first information to a terminal, wherein the first information includes at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

Through the above modules, the embodiments of the present disclosure can reduce the frequency of the terminal entering the connected state to obtain uplink positioning reference signal resource configuration, reduce power consumption, and improve battery life of the terminal.

Optionally, the first information is carried in a Radio Resource Control (RRC) release message and/or a System Information Block (SIB) signaling.

Optionally, the network device further includes:
a second sending module, configured to second information to the terminal, wherein the second information is used to indicate a first downlink reference signal resource available in the at least one downlink reference signal resource, to allow the terminal to determine, according to the second information, the first downlink reference signal resource that is currently available.

Optionally, the first information further includes:
a third indication information, used to indicate an index of an indication bit corresponding to the downlink reference signal resource; in the second information, a value of the indication bit corresponding to the first downlink reference signal resource is a preset value.

Optionally, the second information is carried in a Paging Early Indication (PEI), a paging message, an Msg4 or an MsgB.

Optionally, the network device further includes:
a first determining module, configured to determine, based on the first indication information and the first downlink reference signal resource that is currently available for the terminal, one or more uplink positioning reference signal resources for transmitting, by the terminal, the uplink positioning reference signal;
a first receiving module, configured to receive the uplink positioning reference signal sent by the terminal on the one or more uplink positioning reference signal resources.

Optionally, a time domain interval between the first downlink reference signal resource and the one or more uplink positioning reference signal resources is less than a preset duration.

Optionally, the first configuration information of each uplink positioning reference signal resource includes at least one of the followings: a resource set identifier, a resource identifier, a time domain type, a period, a time slot offset, a transmission comb, a sequence identifier, Bandwidth Part (BWP) configuration information, a timing advance timer (TA timer), or a Reference Signal Received Power (RSRP) variation threshold of the uplink positioning reference signal.

Optionally, the network device further includes:
a second receiving module, configured to receive an Msg3 or MsgA, wherein the Msg3 or MsgA is sent by the terminal in the case that the RSRP variation of the downlink reference signal exceeds the RSRP variation threshold, and the Msg3 or MsgA is used to request an update of available downlink reference signal resource;
a third sending module, configured to send an Msg4 or MsgB to the terminal, wherein the Msg4 or MsgB is used to indicate the updated second downlink reference signal resource and second uplink positioning reference signal resource associated with the updated second downlink reference signal resource, to allow the terminal to send the uplink positioning reference signal based on the second uplink positioning reference signal resource.

Optionally, the network device further includes:
a fourth sending module, configured to, when the first indication information is absent, and the at least one uplink positioning reference signal resource includes N uplink positioning reference signal resources, N is an integer greater than 1, a downlink reference signal in the form of a single frequency network; and
a third receiving module, configured to receive the N uplink positioning reference signal resources sent by the terminal by using different spatial domain transmission filters.

It should be noted that the device in this embodiment corresponds to the method applied on the network side. The implementations in the above embodiments are all applicable to this device embodiment and can achieve the same technical effects. The device provided by the embodiments of the present disclosure can implement all the method steps implemented in the above-mentioned method embodiments and can achieve the same technical effects. The parts and beneficial effects of this embodiment that are the same as those in the method embodiments will not be described in detail here.

Referring to FIG. 10, an embodiment of the present disclosure further provides a network device 1000, including: a transceiver 1001 and a processor 1002;
the transceiver 1001 is configured to send first information to a terminal, wherein the first information includes at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

Optionally, the first information is carried in a Radio Resource Control (RRC) release message and/or a System Information Block (SIB) signaling.

Optionally, the transceiver 1001 is further configured to send second information to the terminal, wherein the second information is used to indicate a first downlink reference signal resource available in the at least one downlink reference signal resource, to allow the terminal to determine, according to the second information, the first downlink reference signal resource that is currently available.

Optionally, the first information further includes third indication information, the third indication information is used to indicate an index of an indication bit corresponding to the downlink reference signal resource; in the second information, a value of the indication bit corresponding to the first downlink reference signal resource is a preset value.

Optionally, the second information is carried in a Paging Early Indication (PEI), a paging message, an Msg4 or an MsgB.

Optionally, the processor is configured to determine, based on the first indication information and the first downlink reference signal resource that is currently available for the terminal, one or more uplink positioning reference signal resources for transmitting, by the terminal, the uplink positioning reference signal;
the transceiver 1001 is further configured to receive the uplink positioning reference signal sent by the terminal on the one or more uplink positioning reference signal resources.

Optionally, a time domain interval between the first downlink reference signal resource and the one or more uplink positioning reference signal resources is less than a preset duration.

Optionally, the first configuration information of each uplink positioning reference signal resource includes at least one of the followings: a resource set identifier, a resource identifier, a time domain type, a period, a time slot offset, a transmission comb, a sequence identifier, Bandwidth Part (BWP) configuration information, a timing advance timer (TA timer), or a Reference Signal Received Power (RSRP) variation threshold of the uplink positioning reference signal.

Optionally, the transceiver 1001 is further used to receive an Msg3 or MsgA, wherein the Msg3 or MsgA is sent by the terminal in the case that the RSRP variation of the downlink reference signal exceeds the RSRP variation threshold, and the Msg3 or MsgA is used to request an update of available downlink reference signal resource; and send an Msg4 or MsgB to the terminal, wherein the Msg4 or MsgB is used to indicate the updated second downlink reference signal resource and second uplink positioning reference signal resource associated with the updated second downlink reference signal resource, to allow the terminal to send the uplink positioning reference signal based on the second uplink positioning reference signal resource.

The transceiver 1001 is further configured to, when the first indication information is absent, and the at least one uplink positioning reference signal resource includes N uplink positioning reference signal resources, N is an integer greater than 1, send a downlink reference signal in a single frequency network manner; and receive the N uplink positioning reference signal resources sent by the terminal by using different spatial domain transmission filters.

It should be noted that the device in this embodiment corresponds to the method applied on the network side as described above. The implementations in the above embodiments are all applicable to this device embodiment and can achieve the same technical effects. The device provided by the embodiments of the present disclosure can implement all the method steps implemented in the above-mentioned method embodiments and can achieve the same technical effects. The parts and beneficial effects of this embodiment that are the same as those in the method embodiments will not be described in detail here.

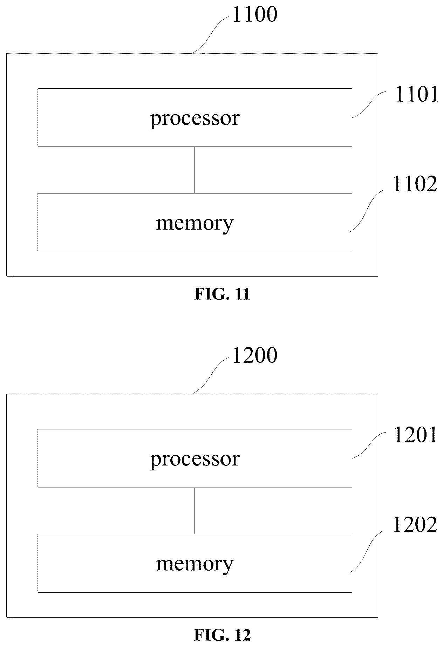

Referring to FIG. 11. an embodiment of the present disclosure further provides a terminal 1100, including a processor 1101, a memory 1102, and a computer program stored in the memory 1102 and executable on the processor 1101. The processor 1101 is configured to execute the computer program to implement the various processes of the embodiment of the reference signal configuration method performed by the terminal and can achieve the same technical effects. To avoid repetition, details are not elaborated here.

Referring to FIG. 12, an embodiment of the present disclosure further provides a network device 1200, including a processor 1201, a memory 1202, and a computer program stored in the memory 1202 and executable on the processor 1201. The processor 1201 is configured to execute the computer program to implement the various processes of the embodiments of the reference signal configuration method performed by the network device, and can achieve the same technical effects. To avoid repetition, details are not elaborated here.

The embodiments of the present disclosure further provide a computer-readable storage medium storing a computer program. The computer program is used to be executed by a processor to implement the various processes of the reference signal configuration method embodiments and achieve the same technical effects. To avoid repetition, details are not elaborated here. The computer-readable storage medium may be, for example, a Read-Only Memory (ROM), Random Access Memory (RAM), a magnetic disk, an optical disk, or the like.

It should be noted that, in the present disclosure, the terms "comprising", "including", or any other variations thereof are intended to cover a non-exclusive inclusion, such that a process, method, article, or apparatus that includes a list of elements includes not only those elements but also other elements not explicitly listed, or elements inherent to such process, method, article, or apparatus. Without further limitation, an element defined by the phrase "including a..." does not exclude the presence of other identical elements in the process, method, article, or apparatus that includes the element.

Through the description of the above embodiments, those skilled in the art can clearly understand that the above-mentioned embodiment methods may be implemented by means of software in combination with the necessary general hardware platform. Obviously, hardware implementations are also possible, but in many cases, the former is a more preferred implementation. Based on such an understanding, essential parts, or parts contributing to the prior art of the technical solution of the present disclosure may be implemented in a form of a software product. The computer software product is stored in a storage medium (such as ROM/RAM, magnetic disk, optical disk), and includes instructions to enable a terminal (which may be a mobile phone, computer, server, air conditioner, or network device, etc.) to execute the methods described in the various embodiments of the present disclosure.

The above embodiments of the present disclosure have been described with reference to the accompanying drawings. However, the present disclosure is not limited to the specific implementations described above. The above-mentioned specific implementations are merely illustrative and not restrictive. Under the teaching of the present disclosure, those of ordinary skill in the art may make various modifications and variations without departing from the principle of the present disclosure and the scope defined by the claims, all of which fall within the protection scope of the present disclosure.

## Claims

1. A reference signal configuration method, applied to a terminal, comprising:
receiving first information sent by a network, wherein the first information comprises at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

2. The method according to claim 1, wherein the first information is carried in a Radio Resource Control (RRC) release message and/or a System Information Block (SIB) signaling.

3. The method according to claim 1, further comprising:
receiving second information sent by the network, wherein the second information is used to indicate a first downlink reference signal resource available in the at least one downlink reference signal resource;
determining, according to the second information, the first downlink reference signal resource that is currently available.

4. The method according to claim 3, wherein
the first information further comprises third indication information, the third indication information is used to indicate an index of an indication bit corresponding to the downlink reference signal resource;
in the second information, a value of the indication bit corresponding to the first downlink reference signal resource is a preset value.

5. The method according to claim 3, wherein the second information is carried in a Paging Early Indication (PEI), a paging message, an Msg4 or an MsgB.

6. The method according to claim 3, further comprising:
determining a resource for transmitting, by the terminal in the inactive state, the uplink positioning reference signal, wherein the determining the resource for transmitting, by the terminal in the inactive state, the uplink positioning reference signal comprises at least one of the followings:
receiving the downlink reference signal based on the first downlink reference signal resource that is currently available;
determining, based on the first downlink reference signal resource and the first indication information, one or more uplink positioning reference signal resources for transmitting the uplink positioning reference signal;
determining a first spatial domain transmission filter for transmitting the uplink positioning reference signal, wherein the first spatial domain transmission filter is the same as a spatial domain transmission filter for receiving the downlink reference signal; or
estimating a path loss based on the received downlink reference signal, and determining a transmission power of the uplink positioning reference signal resource according to the path loss.

7. The method according to claim 6, wherein a time domain interval between the first downlink reference signal resource and the one or more uplink positioning reference signal resources is less than a preset duration.

8. The method according to claim 1, wherein the first configuration information of each uplink positioning reference signal resource comprises at least one of the followings: a resource set identifier, a resource identifier, a time domain type, a period, a time slot offset, a transmission comb, a sequence identifier, Bandwidth Part (BWP) configuration information, a timing advance timer (TA timer), or a Reference Signal Received Power (RSRP) variation threshold of the uplink positioning reference signal.

9. The method according to claim 8, further comprising:
in the case that the RSRP variation of the downlink reference signal exceeds the RSRP variation threshold, sending an Msg3 or MsgA to the network, wherein the Msg3 or MsgA is used to request an update of available downlink reference signal resource;
receiving an Msg4 or MsgB sent by the network, obtaining, from the Msg4 or MsgB, an updated second downlink reference signal resource and second uplink positioning reference signal resource associated with the updated second downlink reference signal resource, and sending the uplink positioning reference signal based on the second uplink positioning reference signal resource.

10. The method according to claim 1, further comprising:
receiving, in the inactive state, two downlink reference signals sent separately by the network, and calculating a time difference of arrival between the two downlink reference signals;
adjusting current timing advance based on the time difference of arrival, to obtain an adjusted timing advance;
sending the uplink positioning reference signal based on the adjusted timing advance.

11. The method according to claim 1, wherein when the first indication information is absent, the method further comprises:
receiving a downlink reference signal sent by the at least one cell;
using timing of the downlink reference signal with the highest RSRP as downlink timing, or using an earliest arrival time among the downlink reference signals as a downlink timing;
performing downlink synchronization based on the downlink timing.

12. The method according to claim 1, wherein when the first indication information is absent, and the at least one uplink positioning reference signal resource comprises N uplink positioning reference signal resources, N is an integer greater than 1; the method further comprising:
sending the N uplink positioning reference signal resources by using different spatial domain transmission filters.

13. A reference signal configuration method, applied to a network device, comprising:
sending first information to a terminal, wherein the first information comprises at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

14. The method according to claim 13, wherein the first information is carried in a Radio Resource Control (RRC) release message and/or a System Information Block (SIB) signaling.

15. The method according to claim 13, further comprising:
sending second information to the terminal, wherein the second information is used to indicate a first downlink reference signal resource available in the at least one downlink reference signal resource, to allow the terminal to determine, according to the second information, the first downlink reference signal resource that is currently available.

16. The method according to claim 15, wherein
the first information further comprises third indication information, the third indication information is used to indicate an index of an indication bit corresponding to the downlink reference signal resource;
in the second information, a value of the indication bit corresponding to the first downlink reference signal resource is a preset value.

17. The method according to claim 15, wherein the second information is carried in a Paging Early Indication (PEI), a paging message, an Msg4 or an MsgB.

18. The method according to claim 13, further comprising:
determining, based on the first indication information and the first downlink reference signal resource that is currently available for the terminal, one or more uplink positioning reference signal resources for transmitting, by the terminal, the uplink positioning reference signal;
receiving the uplink positioning reference signal sent by the terminal on the one or more uplink positioning reference signal resources.

19. The method according to claim 18, wherein a time domain interval between the first downlink reference signal resource and the one or more uplink positioning reference signal resources is less than a preset duration.

20. The method according to claim 13, wherein the first configuration information of each uplink positioning reference signal resource comprises at least one of the followings: a resource set identifier, a resource identifier, a time domain type, a period, a time slot offset, a transmission comb, a sequence identifier, Bandwidth Part (BWP) configuration information, a timing advance timer (TA timer), or a Reference Signal Received Power (RSRP) variation threshold of the uplink positioning reference signal.

21. The method according to claim 20, further comprising:
receiving an Msg3 or MsgA, wherein the Msg3 or MsgA is sent by the terminal in the case that the RSRP variation of the downlink reference signal exceeds the RSRP variation threshold, and the Msg3 or MsgA is used to request an update of available downlink reference signal resource;
sending an Msg4 or MsgB to the terminal, wherein the Msg4 or MsgB is used to indicate the updated second downlink reference signal resource and second uplink positioning reference signal resource associated with the updated second downlink reference signal resource, to allow the terminal to send the uplink positioning reference signal based on the second uplink positioning reference signal resource.

22. The method according to claim 13, wherein when the first indication information is absent, and the at least one uplink positioning reference signal resource comprises N uplink positioning reference signal resources, N is an integer greater than 1; the method further comprising:
sending, by the network device, a downlink reference signal in the form of a single frequency network; and
receiving the N uplink positioning reference signal resources sent by the terminal by using different spatial domain transmission filters.

23. A terminal, comprising a transceiver and a processor, wherein
the transceiver is configured to receive first information sent by a network; the first information comprises at least one of the followings:
first configuration information of at least one uplink positioning reference signal resource;
second configuration information of at least one downlink reference signal resource;
first indication information, used to determine an uplink positioning reference signal resource for transmitting, by the terminal in an inactive state, an uplink positioning reference signal; or
second indication information, used to indicate at least one cell.

24. A terminal comprising: a processor, a memory, and a program stored on the memory and executable on the processor, wherein the processor is configured to execute the program to implement the steps of the method according to any one of claims 1 to 12.

25. A network device, comprising a transceiver and a processor, wherein
the transceiver is configured to send first information to a terminal, wherein the first information comprises at least one of the followings:
first indication information, used to determine an uplink positioning reference signal resource for transmitting, by the terminal in an inactive state, an uplink positioning reference signal;
second indication information, used to indicate at least one cell;
first configuration information, used to configure at least one uplink positioning reference signal resource for the at least one cell; or
second configuration information, used to configure at least one downlink reference signal resource for the at least one cell.

26. A network device, comprising: a processor, a memory, and a program stored on the memory and executable on the processor, wherein the processor is configured to execute the program to implement the steps of the method according to any one of claims 13 to 22.

27. A computer-readable storage medium storing a computer program, wherein the computer program is used to be executed by a processor to implement the steps of the method according to any one of claims 1 to 22.
